Europäisches Patentamt

European Patent Office

Office européen des brevets

(11) Publication number: **0 122 143 B1**

# EUROPEAN PATENT SPECIFICATION

(45) Date of publication of patent specification: **29.05.91**  (51) Int. Cl.⁵: **B60B 27/02**

(21) Application number: **84302407.6**

(22) Date of filing: **09.04.84**

(54) **Rear wheel bearing arrangement.**

(30) Priority: **08.04.83 GB 8309620**

(43) Date of publication of application:
**17.10.84 Bulletin 84/42**

(45) Publication of the grant of the patent:
**29.05.91 Bulletin 91/22**

(84) Designated Contracting States:
**DE FR GB**

(56) References cited:
**DE-B- 1 122 392**
**FR-A- 829 419**
**FR-A- 2 253 400**
**FR-A- 2 379 729**
**US-A- 4 378 868**

(73) Proprietor: **FORD MOTOR COMPANY LIMITED**
**Eagle Way**
**Brentwood Essex CM13 3BW(GB)GB**

Proprietor: **FORD-WERKE AKTIENGESELL-**
**SCHAFT**
**Ottoplatz 2 Postfach 21 03 69**
**W-5000 Köln 21(DE)DE**

Proprietor: **FORD FRANCE SOCIETE AN-**
**ONYME**
**344 Avenue Napoléon Bonaparte B.P. 307**
**F-92506 Rueil Malmaison Cedex(FR)FR**

(72) Inventor: **Heighington, Harold Carl**
**73 Gaynesford**
**Basildon Essex(GB)**

(74) Representative: **Messulam, Alec Moses et al**
**A. Messulam & Co. 24 Broadway**
**Leigh on Sea Essex SS9 1BN(GB)**

EP 0 122 143 B1

## Description

This invention relates to a rear wheel bearing arrangement for a vehicle where drum brakes are used on the rear wheels.

Access to drum brakes for servicing purposes is usually achieved by removing the road wheel and then the drum whereupon the brake shoes and retention media are exposed around the hub flange. On small diameter drums, the hub flange prevents access to the shoe and retention media. Servicing can be accomplished by removing the entire hub and drum assembly, but this exposes the bearings and seals to dirt ingress and necessitates disassembly of the wheel bearing retaining hardware.

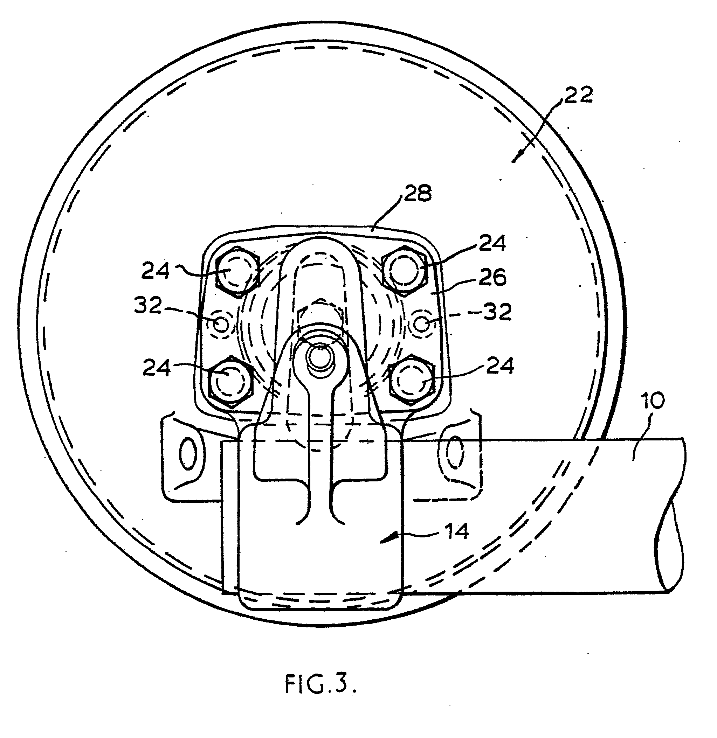

An example of such an arrangement is shown in Fahrwerktechnik 1, by Jörnsen Reimpell, Vogel-Verlag, Würzburg, 5. 1982 Edition on page 304 in Fig 3.1./516. To obtain service access to the brake shoes and retention media in this case, the road wheel is first removed and then the brake drum can be withdrawn axially from over the brake shoes. However, in this situation, the hub flange, to which the road wheel is secured, remains in position and presents an obstacle to servicing of the brake.

French Patent specification 2 379 729 discloses a wheel arrangement where the wheel bearing is permanently secured on a wheel hub which also supports an external braking surface. However, in this specification, the bolts which secure the bearing to the vehicle are only accessible once the road wheel has been removed.

The object of the present invention is to make the service operation of the brakes easier. According to the present invention, there is provided a rear wheel bearing arrangement for a vehicle, the arrangement incorporating a drum braking mechanism and comprising a bracket for mounting to the vehicle, a back plate carrying brake shoes and brake actuating components, a brake drum with an internal braking surface, and a bearing, the bearing having one race fast with a cylindrical internally extending spigot fixedly attached to the drum and the other race detachably secured to the bracket by bolts accessible from behind the back plate, characterised in that the back plate is secured to the bracket by means independent of the bolts and in that the brake drum is adapted to carry a rear road wheel of the vehicle.

The inner race of the bearing is preferably fast with the spigot and with the drum, and the outer race can then be detachably secured to the bracket.

The spigot may be hollow and may permanently secure the inner race of the bearing to the drum.

The invention will now be further described, by way of example, with reference to the accompanying drawings, in which:

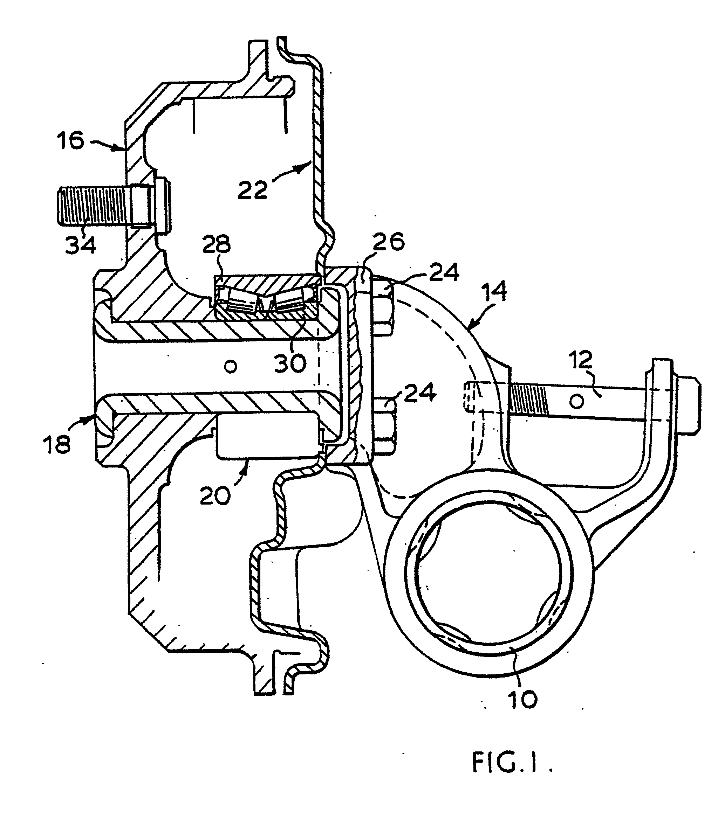

Figure 1 is an elevation, partly in section, of a bearing arrangement in accordance with the invention;

Figure 2 is a plan view of the arrangement shown in Figure 1; and

Figure 3 is a rear view.

The figures show a rear wheel bearing assembly supported on a suspension trailing arm 10. The assembly will also be supported at the bottom of a suspension link which is not shown in the drawings, but which will have its lower end secured by a pin 12. The assembly comprises a bracket 14, a hub-brake drum 16, a spindle 18, a bearing 20 and a back plate 22. In use, the drum 16 and spindle 18 rotate whilst the bracket 14 and the back plate 22 remain stationary.

To open up the assembly, for brake servicing, four bolts 24 have to be released. These bolts pass through apertures in a flange 26 which is part of the bracket 14 and into tapped holes in the outer race 28 of the bearing 20. When these bolts are tightened, the outer race 28 is held rigidly to the bracket, and the back plate 22 is clamped between them. The inner race 30 rotates relative to the outer race 28 and is secured on the spindle 18.

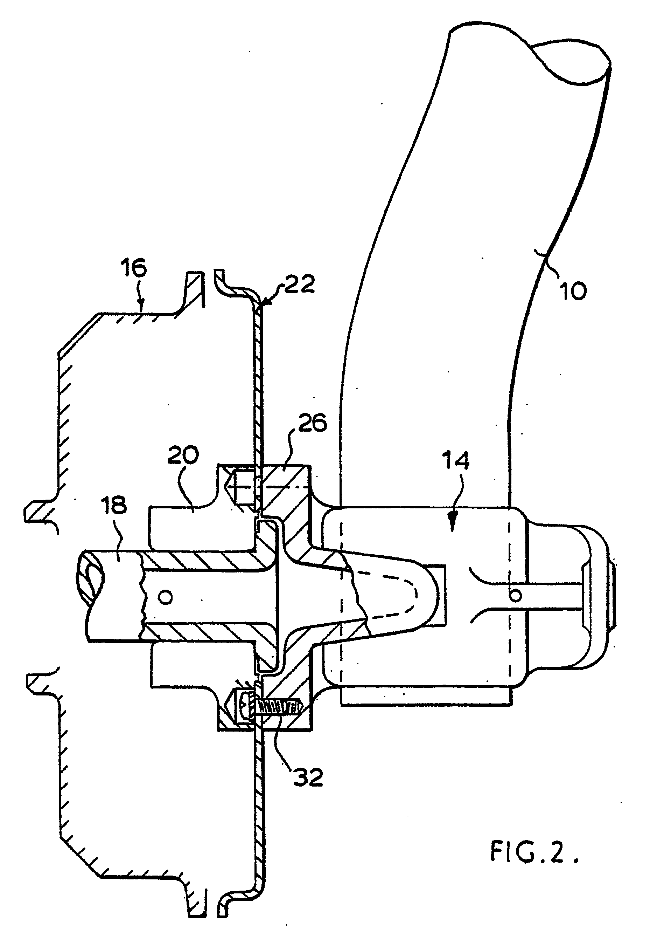

When the bolts 24 are released, the drum 16, spindle 18 and bearing 20 all come away from the bracket 14 as one piece. The bearing is therefore not disturbed and the possibility of ingress of dirt is avoided. The backing plate 22 remains connected to the flange 26 by means of screws 32 which can be seen in Figures 2 and 3. The heads of these screws are accommodated in recesses in the outer race 28 of the bearing.

The brake shoes and retention components are not shown in the drawings. They will in practice be mounted on the back plate 22. When the drum 16 and the spindle 18 and bearing 20 are removed, all these components will be freely accessible for servicing.

Since the bearing, spindle and drum are permanently connected together, the spindle 18 can be in the form of a tube with its ends deformed as shown to keep the unit together. Alternatively, a conventional bolt could be used to perform the same function.

The road wheel, which is not shown in the drawings, will be secured to the drum unit 16 by means of studs 34, only one of which is shown.

With the arrangement described, the initial assembly, during manufacturing, of the bearing, spindle and drum can be done off-line in a closely controlled clean environment which should improve the reliability of the assembly. The assembly can also be checked off the car for rotating friction losses and bearing pre-load under laboratory conditions.

As the wheel spindle is separate from the bracket 14, the bracket can be a casting instead of a forging, as would be necessary if the spindle was part of the bracket. The use of a casting instead of a forging results in a cost saving.

## Claims

1. A rear wheel bearing arrangement incorporating a drum braking mechanism, the arrangement comprising a bracket (14) for mounting to the vehicle, a back plate (22) carrying brake shoes and brake actuating components, a brake drum (16) with an internal braking surface, and a bearing (20), the bearing having one race (28,30) fast with a cylindrical internally extending spigot (18) fixedly attached to the drum and the other race (30,28) detachably secured to the bracket by bolts (24) accessible from behind the back plate, characterised in that the back plate (22) is secured to the bracket (14) by means (32) independent of the bolts (24) and in that the brake drum (16) is adapted to carry a rear road wheel of the vehicle.

2. An arrangement as claimed in Claim 1, characterised in that the inner race of the bearing (30) is fast with the spigot (18) and with the drum (16), and the outer race (28) is detachably secured to the bracket (14).

3. An arrangement as claimed in any preceding claim, characterised in that the spigot (18) is hollow and permanently secures the inner race (30) of the bearing (20) to the drum (16).

## Revendications

1. Disposition de palier pour roue arrière comprenant un mécanisme de freinage à tambour, la disposition comprenant un support (14) destiné au montage sur le véhicule, une plaque arrière (22) portant des mâchoires de frein et des organes d'actionnement du frein, un tambour de frein (16) présentant une surface de freinage intérieure, et un palier (20), le palier comportant une cage (28, 30) solidaire d'un axe cylindrique (18) qui s'étend intérieurement et qui est monté fixe sur le tambour, l'autre cage (30, 28) étant fixée au support de manière amovible au moyen de boulons (24) accessibles depuis l'arrière de la plaque arrière, caractérisée par le fait que la plaque arrière (22) est fixée au support (14) par des moyens (32) indépendants des boulons (24), et par le fait que le tambour de frein (16) est adapté de façon à porter une roue arrière du véhicule.

2. Disposition selon la revendication 1, caractérisée par le fait que la cage intérieure (30) du palier est solidaire de l'axe (18) et du tambour (16), et que la cage extérieure (28) est fixée de manière amovible au support (14).

3. Disposition selon l'une quelconque des revendications précédentes, caractérisée par le fait que l'axe (18) est creux et qu'il fixe en permanence la cage intérieure (30) du palier (20) au tambour (16).

## Ansprüche

1. Hinterradlageranordnung mit einem Trommelbremsenmechanismus, wobei die Anordnung einen Halter (14) zum Anbringen an das Fahrzeug, eine Bremsbacken und Bremsbetätigungsbauteile tragende Rückenplatte (22), eine Bremstrommel (16) mit einer inneren Bremsfläche und ein Lager (20) umfaßt, wobei die eine Laufbahn (28, 30) des Lagers fest mit einem zylindrischen, sich innen erstreckenden und fest an der Trommel angebrachten zapfen (18) verbunden ist und die andere Laufbahn (30, 28) durch Bolzen (24) lösbar an dem Halter befestigt ist, wobei die Bolzen (24) hinter der Rückenplatte zugänglich sind, dadurch gekennzeichnet, daß die Rückenplatte (22) durch ein von den Bolzen (24) unabhängiges Mittel (32) an dem Halter (14) befestigt ist und daß die Bremstrommel (16) ein Hinterrad des Fahrzeugs tragen kann.

2. Anordnung nach Anspruch 1, dadurch gekennzeichnet, daß die innere Laufbahn des Lagers (30) fest mit dem Zapfen (18) und mit der Trommel (16) verbunden ist, und die äußere Laufbahn (28) lösbar an dem Halter (14) befestigt ist.

3. Anordnung nach einem der vorhergehenden Ansprüche, dadurch gekennzeichnet, daß der Zapfen (18) hohl ist und die innere Laufbahn (30) des Lagers (20) permanent an der Trommel (16) befestigt.

FIG.1.

FIG.2.

FIG.3.